# EUROPÄISCHE PATENTSCHRIFT

(11) **EP 2 101 049 B1**
(45) Veröffentlichungstag und Bekanntmachung des Hinweises auf die Patenterteilung: **23.12.2015**
(21) Anmeldenummer: 08018199.3
(22) Anmeldetag: 17.10.2008
(51) Int. Cl.: F01N 13/18, F01N 3/28, F01N 3/035, F01N 3/20, F02B 37/18, F01N 3/10, F01N 13/00

(54) **Kompaktes Abgasnachbehandlungssystem**
Compact exhaust gas after treatment system
Système de post-traitement de gaz d'échappement compact

(30) Priorität: 19.02.2008 DE 102008010071
(43) Veröffentlichungstag der Anmeldung: 16.09.2009
(73) Patentinhaber: MAN Truck & Bus AG, 80995 München (DE)
(72) Erfinder: Döring, Andreas, 82008 München (DE); Kistner, Andreas, 91732 Merkendorf (DE)

(56) Entgegenhaltungen:
- EP-A1- 1 338 562
- EP-A2- 1 481 719
- WO-A1-03/056151
- DE-A1- 10 002 284
- DE-A1- 19 816 259
- DE-A1- 19 855 384
- DE-A1- 19 960 976
- DE-C1- 19 740 702
- US-A1- 2002 151 231
- US-B1- 6 415 603

## Beschreibung

Gegenstand der Erfindung ist eine Vorrichtung zur Umsetzung von Abgasbestandteilen einer Brennkraftmaschine mittels wenigstens eines Katalysators und/ oder Partikelfilters und/ oder Partikelabscheiders und zum Ausgleich von Relativbewegungen zwischen der Brennkraftmaschine und dem Abgastrakt und/ oder von Relativbewegungen unterschiedlicher Teile des Abgastraktes mittels wenigstens eines, die Relativbewegungen zulassenden Kompensators.

Auf Grund der immer strengeren Abgasgrenzwerte, die nicht mehr allein durch motorische Maßnahmen zu erreichen sind, werden die meisten Brennkraftmaschinen inzwischen mit Nachbehandlungssystemen zur Verminderung der Schadstoffemissionen ausgerüstet.

Dabei kann es sich beispielsweise um
- Drei-Wege-Katalysatoren
- NOₓ-Speicherkatalystoren
- Dieseloxidationskatalysatoren
- SCR-Katalysatoren
- Partikelfilter
handeln.

Da die Partikelfilter und SCR-Katalysatoren eine relativ neue Entwicklung darstellen, werden sie im Folgenden kurz erläutert.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren, in sauerstoffreichem Abgas ist zusätzlich ein Reduktionsmittel erforderlich, um die Selektivität und die NO_{X} -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung so-lcher Verfahren ist der DE 34 28 232 A1 zu entnehmen. Als SCR-Katalysatoren können V₂O₅-haltige Mischoxide, beispielsweise in der Form V₂O₅/WO₃/TiO₂, verwendet werden. Typische V₂O₅-Anteile liegen dabei zwischen 0,2-3%. Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig.

4NO+4NH₃+O₂ ⇒ 4N₂+6H₂O (1)

Wird den SCR-Katalysatoren ein platinhaltiger NO-Oxidationskatalysator zur Bildung von NO₂ vorgeschaltet

2NO+O₂ ⇔ 2NO₂ (2)

so kann die SCR-Reaktion erheblich beschleunigt und die Tieftemperaturaktivität merklich angehoben werden.

NO+2NH₃+NO₂ ⇒ 2N₂+3H₂O (3)

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von unverbrauchtem Ammoniak kommt. Um hier Abhilfe zu schaffen, wird häufig ein, dem SCR-Katalysator nachgeordneter Ammoniak-Sperrkatalysator eingesetzt, der überschüssigen Ammoniak zu Stickstoff und Wasserdampf umsetzt. Weiter kann der Einsatz von V₂O₅ als Aktivmaterial für den SCR-Katalysator dann Probleme aufwerfen, wenn die Abgastemperatur am SCR-Katalysator über 650°C liegt, weil V₂O₅ dann sublimiert. Aus diesem Grund werden für Hochtemperaturanwendungen V₂O₅-freie Eisen- oder Kupferzeolithe eingesetzt.

Zur Minimierung der Feststoffpartikel werden sowohl im Kraftwerksbereich als auch bei Fahrzeugen entweder sogenannte Partikelabscheider oder Partikelfilter eingesetzt. Eine für die Anwendung in Fahrzeugen typische Anordnung mit Partikelabscheider ist beispielsweise in der EP 1 072 765 A1 beschrieben. Derartige Anordnungen unterscheiden sich von solchen mit Partikelfiltern dadurch, dass der Durchmesser der Kanäle des Partikelabscheiders wesentlich größer als der Durchmesser der größten vorkommenden Partikel ist, während bei Partikelfiltern der Durchmesser der Filterkanäle im Bereich der Durchmesser der Partikel liegt. Infolge dieses Unterschiedes sind Partikelfilter verstopfungsgefährdet, was den Abgasgegendruck erhöht und die Motorleistung mindert. Eine Anordnung und ein Verfahren mit Partikelfilter ist der EP 0 341 832 A2 zu entnehmen. Die beiden vorgenannten Anordnungen bzw. Verfahren zeichnen sich dadurch aus, dass der jeweils stromauf zum Partikelabscheider bzw. Partikelfilter angeordnete Oxidationskatalysator - zumeist ein Katalysator mit Platin als Aktivmaterial - das Stickstoffmonoxid im Abgas mit Hilfe des ebenfalls enthaltenen Restsauerstoffes zu Stickstoffdioxid oxidiert, das sich wiederum im Partikelabscheider, bzw. Partikelfilter mit den Kohlenstoffpartikeln zu CO, CO₂, N₂ und NO umsetzt. Auf diese Weise erfolgt eine kontinuierliche Entfernung der angelagerten Feststoffpartikel.

2 NO₂ + C ⇒ 2 NO + CO₂ (4)

2 NO₂ + C ⇒ 2 NO + CO (5)

2 C + 2 NO₂ ⇒ N₂ + 2CO₂ (6)

Eine weitere Möglichkeit, die im Partikelabscheider oder Partikelfilter angelagerten Rußpartikel zu entfernen besteht darin, diesen in Regenerationszyklen bei hohen Temperaturen mit dem im Abgasstrom vorhandenen Sauerstoff zu oxidieren.

C + O₂ ⇒ CO₂ (7)

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feststoffpartikelemission erforderlich. Hierzu sind bereits verschiedene Anordnungen und Verfahren bekannt geworden.

In der DE 103 48 799 A1 ist eine Anordnung beschrieben, die aus einem Oxidationskatalysator, einem stromab zu diesem im Abgasstrom angeordneten SCR-Katalysator und einem wiederum zu diesem stromab im Abgasstrom angeordneten Partikelfilter besteht. Die Zuführung des Reduktionsmittels für die im SCR-Katalysator ablaufende selektive katalytische Reaktion erfolgt unmittelbar vor dem SCR-Katalysator über eine in Abhängigkeit von Betriebsparametern der Brennkraftmaschine gesteuerte Harnstoffeinspritzeinrichtung. Nachteilig bei dieser Anordnung ist, dass das im Oxidationskatalysator erzeugte Stickstoffdioxid durch die selektive katalytische Reduktion im SCR-Katalysator im wesentlichen vollständig verbraucht ist, also für die Umsetzung der im nachgeordneten Partikelfilter angelagerten Feststoffpartikel nicht zur Verfügung steht. Die Regeneration des Partikelfilters muss deshalb aufwändig durch zyklisches Aufheizen des Abgasstroms bewerkstelligt werden, indem der Abgasstrom mit unverbrannten Kohlenwasserstoffen angereichert wird. Dies geschieht entweder durch Anfetten des Verbrennungsgemisches oder Eindüsen von Kraftstoff vor den Partikelfilter. Eine derartige Anordnung zum Regenerieren des Partikelfilters ist einerseits aufwändig und damit teuer, andererseits erzeugt die zyklische Regeneration des am Ende der Anordnung liegenden Partikelfilters erneut Schadstoffe die nicht mehr aus dem Abgas entfernt werden können. Zudem kann es beim Einsatz von Partikelfiltern zu einer Verstopfung der Filter durch Ölasche kommen, so dass diese in bestimmten Intervallen ausgebaut und gereinigt werden müssen.

Eine weitere Kombination aus einem Partikelfilter und einer Anordnung zur selektiven katalytischen Reduktion ist aus der EP 1 054 722 A1 bekannt geworden. Die dort beschriebene Anordnung besteht aus einem im Abgasstrom angeordneten Oxidationskatalysator der den Anteil des Stickstoffdioxides im Abgas erhöht, einem stromab nachgeordneten Feststofffilter, einem Reservoir für die Reduktionsflüssigkeit, sowie einer Einspritzeinrichtung für die Reduktionsflüssigkeit, die hinter dem Feststofffilter angeordnet ist und einem hierzu im Abgasstrom stromab angeordneten SCR-Katalysator. Die vorstehend beschriebene Anordnung erlaubt zwar eine kontinuierliche Umsetzung der im Feststofffilter angelagerten Feststoffpartikel vom Ruß-Typ mit Hilfe des im Oxidationskatalysator erzeugten Stickstoffdioxids, hat aber einen anderen gravierenden Nachteil. Der Partikelfilter bedingt eine Abkühlung des Abgases, so dass z. B. bei Verwendung der heute marktüblichen, mit AdBlue bezeichneten Reduktionsflüssigkeit die Abgastemperatur insbesondere nach dem Start der Brennkraftmaschine, bzw. beim Betreiben der Brennkraftmaschine im unteren Leistungsbereich zu niedrig ist um ohne den Anfall problematischer Nebenprodukte aus der 33%igen wässrigen Harnstofflösung Ammoniak zu erzeugen.

Im Zusammenhang mit der Zersetzung von Harnstoff ((NH₂)₂CO) in Ammoniak (NH₃) ist bekannt, dass dies unter optimalen Bedingungen (Temperaturen über 350° C) in zwei Stufen geschieht, nach

(NH₂)₂CO ⇒ NH₃ + HNCO (8)

erfolgt zunächst die Thermolyse, d. h. die thermische Zersetzung von Harnstoff. Anschließend erfolgt nach

HNCO + H₂O ⇒ NH₃ + CO₂ (9)

die Hydrolyse, also die katalytische Zersetzung von Isocyansäure (HNCO) in Ammoniak (NH₃) und Kohlendioxid (CO₂).

Da das Reduktionsmittel bei der Verwendung von AdBlue in einer in Wasser gelösten Form vorliegt, muss dieses Wasser vor und während der eigentlichen Thermo- und Hydrolyse verdampfen.

Sind die bei der vorstehenden Reaktion nach (8) und (9) vorliegenden Temperaturen unter 350°C bzw. wird nur langsam erhitzt, ist es aus der DE 40 38 054 A1 bekannt, dass hauptsächlich feste, unschmelzbare Cyanursäure durch Trimerisierung der nach (8) gebildeten Isocyansäure gemäß

3HNCO ^{<350°C→} _{←>350°C} (HNCO)₃ (10)

entsteht, die zur Verstopfung des nachfolgenden SCR-Katalysators führt. Abhilfe kann, wie in der erwähnten DE 40 38 054 ausgeführt, dadurch geschaffen werden, dass der mit dem Reduktionsmittel beladene Abgasstrom über einen Hydrolysekatalysator geführt wird. Die Abgastemperatur, ab der eine quantitative Hydrolyse möglich wird, lässt sich so auf 160°C drücken. Aufbau und Zusammensetzung eines entsprechenden Katalysators ist in der erwähnten Publikation ebenso beschrieben wie Aufbau und Funktion eines mit einem Hydrolysekatalysator ausgestatteten SCR-Katalysator-Systems.

Um die Katalysatoren zu verkleinern, aber die Verweilzeit in den Katalysatoren konstant zu lassen, werden die Hydrolysekatalysatoren auch in einem Abgasteilstrom betrieben, der dem Abgasstrom entnommen und nach erfolgter Hydrolyse diesem wieder zugeführt wird. Eine entsprechende Anordnung ist der EP 1052009 A1 zu entnehmen. Besonders vorteilhaft ist es dabei, wenn die Entnahme des Abgasteilstroms möglichst motornah erfolgt, um den Hydrolysekatalysator auf einem hohen Temperaturniveau betreiben zu können. Bei abgasaufgeladenen Brennkraftmaschinen ist es weiter vorteilhaft, den Abgasteilstrom bereits vor dem Turbolader zu entnehmen und ihn stromab des Turboladers wieder zurückzuführen. Allerdings ergibt sich bei der motornahen Entnahme des Abgasteilstroms und der Zudosierung des Reduktionsmittels ein Problem. Bei bestimmten Betriebszuständen der Brennkraftmaschine, hauptsächlich im Schwachlast-, Schub-, Motorbremsbetrieb, in Leerlaufphasen oder beim Abstellen des Motors, kann eine Umkehr der Strömungsrichtung des Abgases eintreten, so dass Reduktionsmittel, aus dem Reduktionsmittel abgespaltener Ammoniak oder aus dem Reduktionsmittel gebildete Nebenprodukte, wie beispielsweise Isocyansäure (Gleichung 9), Cyanursäure (Gleichung 10) usw., durch Rückströmungen und/oder Diffusion in Richtung Motorblock, mit den abgasberührten Teilen des Motors in Berührung kommen können. Dies kann zur Korrosion der dort verbauten Materialien insbesondere der Dichtungen führen.

Eine Lösung dieses Problems bestünde in der Anordnung eines Katalysators mit Oxidationsaktivität für die Zersetzungsprodukte des Harnstoffs zwischen der Eindüsstelle und dem Motorblock, an dem im Falle einer Rückströmung, diese hochkorrosiven Verbindungen zerstört würden.

Durch einen weiteren Katalysator verschärft sich allerdings das durch die Vielzahl zu verwendender Katalysatoren, das Reduktionsmitteleinspritzsystem und Partikelabscheider ohnehin bereits gegebene Platzproblem, da insbesondere bei in Fahrzeugen verbauten Brennkraftmaschinen oft kein ausreichender Bauraum zur Verfügung.

In Verbindung mit dem Abgastrakt von Brennkraftmaschinen, also dem Teil, der auch die Katalysatoren aufnimmt, ist es aus der DE 10157131 C2 bekannt, Kompensatoren zu verbaut. Dabei handelt es sich um flexible Bauteile, die die mechanischen Schwingungen des Motors und die Wärmedehnungen des Abgastraktes ausgleichen. Sie werden in den Abgastrakt integriert und werden somit vom Abgas durchströmt.

Darüber ist es aus den Druckschriften DE 100 02 284 A1, US 6 415 603 B1, DE 189 16 259 A1 und WO 03/056151 A1 bekannt, in einem Kompensator zur Umsetzung von Abgasbestandteilen einer Brennkraftmaschine einen Katalysator anzuordnen. Der Katalysator ist dabei innerhalb des Kompensators oder innerhalb eines Teiles des Abgastrakts, der unlösbar mit dem Kompensator verbunden ist, angeordnet, wobei der Außendurchmesser des Katalysators kleiner oder gleich dem Innendurchmesser des Kompensators oder des Teils des Abgastrakts ist, der unlösbar mit dem Kompensator verbunden ist.

Ausgehend vom vorstehend beschriebenen Stand der Technik ist es Aufgabe der Erfindung, unter Vermeidung der Nachteile bekannter Anordnungen ein Abgasnachbehandlungssystem oder Teile eines Abgasnachbehandlungssystems so im Abgastrakt anzuordnen, dass eine Vergrößerung des Bauraums vermieden werden kann.

Gelöst wird die Aufgabe durch eine Vorrichtung gemäß dem Kennzeichen des Anspruches 1, vorteilhafte Weiterbildungen der erfindungsgemäßen Vorrichtung sind in den abhängigen Ansprüchen gekennzeichnet.

Es wurde von der Grundüberlegung ausgegangen, dass durch die Mehrfachnutzung vorhandener Bauräume der Platzbedarf für ein System zur Abgasnachbehandlung minimiert werden kann. Es wurde gefunden, dass im Abgastrakt von Brennkraftmaschinen üblicherweise verbauten Kompensatoren, sich für den Einbau von Katalysatoren und/ oder Partikelfiltern und/ oder Partikelabscheidern sehr gut eignen. Da auf diese Weise der von den Kompensatoren benötigte Bauraum auch für die Katalysatoren, also doppelt genutzt werden kann, steht so gewonnener Bauraum vorteilhaft für andere Zwecke zur Verfügung.

Da die Kompensatoren häufig sehr nah an der Brennkraftmaschine verbaut werden, bietet sich diese Lösung in besonders vorteilhafter Weise bei Katalysatoren an, die ohnehin sehr motornah angebracht werden müssen.

Bei dem Kompensatorelement, also dem Teil des Kompensators, der die Relativbewegung zulässt, kann es sich vorteilhaft um einen Faltenbalg oder einen Wellschlauch oder eine Schiebehülse handeln

Bezüglich der in den Kompensator integrierbaren Katalysatortypen besteht keine Beschränkung, es kann sich z. B. um Drei-Wege-Katalysatoren, NO_{X}-Speicherkatalysatoren, SCR-Katalysatoren, Hydrolysekatalysatoren, NH₃-Oxidationskatalystoren, Katalysatoren zur Oxidation eines Reduktionsmittels, HC-Oxidationskatalysatoren, Oxidationskatalysatoren zur Erzeugung von NO₂ aus NO oder andere Katalysatortypen handeln, ebenso ist die Integration beliebiger Kombinationen aus zwei oder mehreren der vorgenannten Katalysatortypen denkbar.

Die Integration von Katalysatoren und gegebenenfalls Partikelabscheider bzw. Partikelfiltern in Kompensatoren bietet sich besonders dann an, wenn diese motornah verbaut sind. Dies gilt in besonderem Maße für die Hydrolysekatalysatoren zur Zersetzung von ammoniakabspaltenden Reduktionsmittel und eventuell stromauf von diesen angeordnete Oxidationskatalysatoren, insbesondere wenn die Zuführung des Ammoniaks oder eines Ammoniak abspaltenden Stoffes in einem Abgasteilstrom erfolgt, der stromauf zum SCR-Katalysator vom Abgasstrom abzweigt. Zur Zuführung des Reduktionsmittels (Ammoniak oder Ammoniak abspaltender Stoff) ist dabei üblicherweise ein Vorratsbehälter für das Reduktionsmittel und eine Zumesseinrichtung für das Reduktionsmittel vorgesehen, wobei die Zumesseinrichtung das Reduktionsmittel in den Abgasteilstrom zugibt und der Abgasteilstrom stromab zur Zuführstelle und stromauf zum SCR-Katalysator, z.B. mittel einer Düse in den Abgasstrom zurückgeführt ist. Der stromab zur Rückführstelle angeordnete SCR-Katalysator reduziert die im Abgasstrom enthaltenen Stickoxide mit Hilfe des abgespaltenen Ammoniaks im Wege der selektiven katalytischen Reduktion zu Stickstoff und Wasserdampf. Im Abgasteilstrom, stromauf zu der Zuführstelle für das Reduktionsmittel, befindet sich ein Oxidationskatalysator, der bei den Motorbetriebsbedingungen, bei denen eine Umkehr des Abgasstroms in Richtung Brennkraftmaschine gegeben ist, zurückströmenden Ammoniak und/ oder zurückströmende Reduktionsmittelzersetzungsprodukte oxidiert.

Das erfindungsgemäße Abgasnachbehandlungssystem erlaubt es in vorteilhafter Weise einerseits, Stickoxide aus dem Abgas zu Stickstoff und Wasser umzusetzen, andererseits wird ohne zusätzlichen, insbesondere steuerungs- oder regelungstechnischen Aufwand verhindert, dass durch den bei bestimmten Betriebsbedingungen der Brennkraftmaschine gegebenen Rückstrom von Abgasen, Ammoniak oder Reduktionsmittel oder aus dem Reduktionsmittel gebildete Nebenprodukte mit abgasberührenden Teilen der Brennkraftmaschine in Berührung kommen und diese so vor einer dadurch bedingten Korrosion geschützt sind. Der Raumbedarf für das erfindungsgemäße Abgasnachbehandlungssystem lässt sich durch die Integration wenigstens eines der genannten Katalysatoren in einen Kompensator, vorteilhaft auf ein Minimum begrenzen. Vorteilhaft werden mehrere Katalysatoren, gegebenenfalls zusammen mit einem Partikelabscheider oder Partikelfilter in einem Kompensator angeordnet.

Ein in den Kompensator integrierter Oxidationskatalysator lässt sich dabei so ausbilden, dass er einerseits den zurückströmenden Ammoniak und/ oder die zurückströmenden Reduktionsmittelzersetzungsprodukte oxidiert und andererseits, bei den Motorbetriebsbedingungen, bei denen das Abgas in Normalrichtung, also von der Brennkraftmaschine weg strömt, im Abgas mitgeführtes Kohlenmonoxid und/ oder Stickstoffmonoxid und/ oder mitgeführte Kohlenwasserstoffe oxidiert. Dadurch wird in vorteilhafter Weise erreicht, dass die angesprochenen Abgasanteile im Abgasteilstrom in unschädliche Verbindungen oder in solche Verbindungen, die in den nachfolgenden Reaktionen verwertbar sind, übergeführt werden. So bewirkt die Oxidation von Stickstoffmonoxid beispielsweise, dass der SCR-Reaktion im SCR-Katalysator zusätzliches, reaktionsfreudigeres Stickstoffdioxid zugeführt wird.

Bei der vorstehend angesprochenen Oxidation von Ammoniak an dem stromauf zur Zuführstelle für das Reduktionsmittel angeordneten Oxidationskatalysator ist gewünscht, dass die Reaktion bis zur Oxidationsstufe 0, also Stickstoff läuft.

4NH₃+3O₂ ⇒ 2N₂+6H₂O (11)

Allerdings gelingt dies nicht immer selektiv, so dass die Oxidation oft bis zur Oxidationsstufe [+1] (Lachgas - N₂O), [+2] (Stickstoffmonoxid -NO) oder gar [+4] (Stickstoffdioxid - NO₂) weiterläuft.

2 NH₃ + 2,5 O₂ ⇒ 2 NO + 3 H₂O [+2] (12)

2NO+O₂ ⇔ 2NO₂ [+4] (13)

NH₃ +NO₂ ⇒ 2NO+H₂O [+2] (14)

2NH₃+2NO₂+½O₂ ⇒ 2N₂O+H₂O [+1] (15)

Um die Selektivität bezüglich Stickstoff zu erhöhen ist es vorteilhaft, im Abgasteilstrom, stromab zum Oxidationskatalysator und stromauf zur Zuführstelle für das Reduktionsmittel, einen zusätzlichen SCR-Katalysator zur selektiven Reduktion von Stickoxiden mit Hilfe von zurückströmendem Ammoniak im Kompensator angeordnet. Damit wird in vorteilhafter Weise erreicht, dass zurückströmender Ammoniak zuerst mit Hilfe von im Abgasteilstrom enthaltenen Stickoxiden gemäß den Gleichungen (1) und (3) zu Stickstoff oxidiert. Diese Reaktion läuft hochselektiv ab, so dass die Bildung von unerwünschten Nebenprodukten, wie Lachgas oder Stickoxide vermieden wird.

Nur wenn keine Stickoxide mehr im Abgas vorhanden sind, treffen Ammoniak und/oder Reduktionsmittelzersetzungsprodukte auf den reinen Oxidationskatalysator, der stromauf des SCR-Katalysators angeordnet ist, dort läuft dann die Reaktion bei stark reduzierter Menge an Restammoniak im wesentlichen nach der Reaktionsgleichung (11) ab.

Auch der zusätzliche SCR-Katalysator benötigt keinen zusätzlichen Bauraum, weil er im Kompensator untergebracht werden kann. Selbstverständlich können der Oxidationskatalysator im Abgasteilstrom und der stromab zu diesem angeordnete zusätzliche SCR-Katalysator, vorteilhaft zu einem Bauteil zusammengefasst, was den beanspruchten Bauraum zusätzlich minimiert. Von besonderem Vorteil ist es dabei, den Oxidationskatalysator im Abgasteilstrom, z.B. durch eine Beschichtung mit entsprechend aktivem Katalysatormaterial, mit einer SCR-Aktivität für Stickoxide auszustatten.

Zur Begünstigung der Abspaltung von Ammoniak aus dem Reduktionsmittel kann stromab zur Zuführstelle für das Reduktionsmittel ein Hydrolysekatalysator angeordnet sein. Weiter ist es vorteilhaft, stromab zur Zuführstelle für das Reduktionsmittel im Abgassteilstrom und/ oder im Abgasstrom wenigstens eine Abscheidevorrichtung zum Abscheiden von Partikeln aus dem Abgas anzuordnen. Auch der Hydrolysekatalysator und die Abscheidvorrichtung zum Abscheiden von Partikeln sind in einen Kompensator integrierbar.

Meist wird der Kompensator aus Montagezwecken fest mit kurzen Rohrstücken zu einem Bauteil verschweißt. Es ergibt sich so die Möglichkeit, alle vorstehend beschriebenen, im Abgasteilstrom angeordneten Bauteile, die Katalysatoren die Zuführvorrichtung, z.B. Düse für das Reduktionsmittel, sowie gegebenenfalls einen Partikelabscheider für den Abgasteilstrom innerhalb des Kompensators und/oder innerhalb der Rohrstücke, also des Teiles des Abgastrakts, der unlösbar mit dem Kompensator verbunden ist, anzuordnen. Auf diese Weise kann eine sehr kompakt bauende Reduktionsmittelaufbereitung in einem Bauteil bereitgestellt werden.

Durch die Anordnung eines weiteren Oxidationskatalysators im Abgasstrom, der bei normaler Strömungsrichtung des Abgases das im Abgasstrom enthaltene Stickstoffmonoxid zumindest teilweise in Stickstoffdioxid überführt, wird durch die Erhöhung des Anteils an Stickstoffdioxid einerseits die Voraussetzung geschaffen, eine im Abgasteilstrom nachgeordnete Abscheidvorrichtung zum Abscheiden von Partikeln aus dem Abgas in vorteilhafter Weise kontinuierlich zu regenerieren, andererseits steht für die stromab zur Rückführung des Abgasteilstroms in den Abgasstrom stattfindende SCR-Reaktion ebenfalls ein höherer Anteil des reaktionsfreudigeren Stickstoffdioxids zur Verfügung, was den Umsatz an Stickoxiden vorteilhaft erhöht. Nachdem der Abgasstrom an anderer Stelle als der Abgasteilstrom von der Brennkraftmaschine weg geführt wird, z.B. nach dem Turbolader, wird im Abgasstrom ein weiterer Komparator notwendig, in diesen kann der weitere Oxidationskatalysator vorteilhaft integriert werden.

Für den angesprochenen Oxidationskatalysator zur Oxidation von Ammoniak sowie den weiteren Oxidationskatalysator lassen sich vorteilhaft Platin und/oder Palladium und/oder Iridium und/oder deren Oxide und/oder IrTiO_{X} und/oder Zeolithe als Aktivmaterialien einsetzen.

Bei dem im Abgasteilstrom angeordneten Oxidationskatalysator zur Oxidation von Ammoniak ist es von Vorteil, entlag der Strömungsrichtung des Abgases gesehen unterschiedliche Eigenschaften vorzusehen, derart, dass die der Zuführstelle für das Reduktionsmittel benachbarte Seite Ammoniak bevorzugt selektiv zu Stickstoff und Wasser oxidiert, während die gegenüberliegende Seite dagegen im Abgas mitgeführtes Kohlenmonoxid und/ oder Stickstoffmonoxid und/ oder mitgeführte Kohlenwasserstoffe umsatzoptimiert oxidiert. Dies lässt sich vorteilhaft dadurch erreichen, dass die der Zuführstelle für das Reduktionsmittel benachbarte Seite eine höhere Beladung mit Palladium und/ oder Iridium und/ oder Zeolithen aufweist, als die der Brennkraftmaschine zugewandte Seite. Der gleiche Effekt lässt sich dadurch erreichen, dass die der Zuführstelle für das Reduktionsmittel benachbarte Seite des Oxidationskatalysators eine niedrigere Beladung mit Platin und/ oder dessen Oxiden aufweist, als die der Brennkraftmaschine zugewandte Seite.

Als Aktivkomponenten für die SCR-Katalysatoren zur Reduktion von Stickoxiden mit Hilfe von Ammoniak kommen in vorteilhafter Weise Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe zum Einsatz. Für den Hydrolysekatalysator zur Verbesserung der Freisetzung von Ammoniak kann als Aktivkomponenten Titandioxid und/oder Siliziumdioxid und/oder Aluminiumoxid und/oder Zeolithe zur Anwendung kommen.

Bei mittels Abgasturbolader aufgeladenen Brennkraftmaschinen kann es von Vorteil sein, den Abzweig des Abgasteilstroms, in den die Reduktionsflüssigkeit eingespritzt wird, stromauf zur Turbine des Abgasturboladers anzuordnen, um für die Abspaltung des Ammoniaks ein möglichst hohes Temperaturniveau zu schaffen. Handelt es sich um eine zweiflutig gespeiste Turbine, wobei die eine Flut von wenigstens einem ersten Zylinder und die andere Flut von wenigstens einem zweiten Zylinder mit Abgas beschickt wird, ist es vorteilhaft, den Abgasteilstrom von einer der beiden Fluten abzuzweigen. Die Zylinder der Flut, von der der Abgasteilstrom abzweigt, können dann mit anderen Motorparametern betrieben werden, als die Zylinder der anderen Flut, so dass in vorteilhafter Weise eine Optimierung der Verhältnisse im Abgasteilstrom hinsichtlich der Aufbereitung des Reduktionsmittels möglich wird, indem beispielsweise die Abgastemperatur in der Startphase oder in Niedriglastbereich angehoben wird.

Handelt es sich um eine Brennkraftmaschine mit zwei Abgasturboladern, wobei die Turbine des einen Abgasturboladers von einer ersten Zylinderbank der Brennkraftmaschine und die Turbine des anderen Abgasturboladers von einer zweiten Zylinderbank der Brennkraftmaschine mit Abgas beschickt wird, ist es vorteilhaft, wenn der Abgasteilstrom vor der Turbine eines der beiden Abgasturbolader vom Abgasstrom abzweigt. Die Zylinder der Zylinderbank, von deren Abgastrakt der Abgasteilstroms abzweigt, können dann mit anderen Motorparametern betrieben werden, als die Zylinder der anderen Zylinderbank. Auf diese Wiese wird auch hier eine vorteilhafte Optimierung der Verhältnisse im Abgasteilstrom hinsichtlich der Aufbereitung des Reduktionsmittels möglich, indem beispielsweise die Abgastemperatur in der Startphase oder in Niedriglastbereich angehoben wird.

Zur exakten Dosierung des Reduktionsmittels kann es weiter vorteilhaft sein, im Abgasteilstrom ein Drosselelement anzuordnen, das die Raumgeschwindigkeit des Abgases und/ oder die Abgasmenge im Abzweig steuert oder regelt.

Um bei in Fahrzeuge eingebauten Brennkraftmaschinen im Schubbetrieb oder im Motorbremsbetrieb den durch den Abgasrückstrom mit Ammoniak bzw. Reduktionsmittelzersetzungsprodukten beaufschlagten Oxidationskatalysator bzw. den vorgesehenen SCR-Katalysator zu entlasten, ist es vorteilhaft, stromauf zur Zuführstelle für das Reduktionsmittel ein Rückschlagventil anzuordnen. Alternativ oder zusätzlich kann der Einsatz eines steuerbaren, stromauf zur Zuführstelle im Abgasteilstrom angeordneten Absperrelementes, z. B. in Form einer Abgasklappe, vorteilhaft sein, das den Abgasteilstrom im Bedarfsfall abriegelt. Eine derartige steuerbare Klappe könnte auch in vorteilhafter Weise als steuer- oder regelbares Drosselelement dienen und wäre über das ohnehin vorhandene Motorsteuergerät ansteuerbar.

Weiterhin kann es vorteilhaft sein, stromab zum SCR-Katalysator einen Katalysator zum Oxidieren von Ammoniak anzuordnen, um einen Ammoniakschlupf zu vermeiden.

Hinsichtlich der vorstehend erwähnten Oxidationskatalysatoren, die, wie ausgeführt, unterschiedlichen Zwecken dienen, ist es von Vorteil, diese, durch die Wahl der jeweils am besten geeigneten Aktivkomponenten, auf den jeweiligen Zweck sowie die jeweils nachfolgenden chemischen Reaktionen hin zu optimieren.

Nachdem die Abgastemperatur ebenso wie der Gehalt an Stickstoffdioxid im Abgas die Wirksamkeit des Abgasnachbehandlungssystems wesentlich mit beeinflusst, kann es von Vorteil sein, durch Variieren der Motoreinstellung mittels der ohnehin vorhandenen Motorsteuereinrichtung, die Abgastemperatur bzw. den Gehalt an Stickstoffdioxid zu verändern. Insbesondere können, durch Veränderung der Motorparameter oder durch Zuführen von Kohlenwasserstoffen in den Abgasstrom vor dem Oxidationskatalysator zur Oxidation von Stickstoffmonoxid (und/ oder von Kohlenwasserstoff und/ oder von Kohlenmonoxid), die Abgastemperatur und der Stickstoffdioxidgehalt angehoben werden.

Weiter ist es vorteilhaft, mehrere der im Abgasnachbehandlungssystem enthaltenen Katalysatoren in einem Gehäuse z. B. einem Kompensators und/oder innerhalb eines Teiles des Abgastrakts, der unlösbar mit dem Kompensator verbunden ist, zusammenzufassen, um die Kosten für das System und insbesondere den Platzbedarf für den Einbau in z. B. Nutzfahrzeuge zu minimieren. Partikelabscheider bzw. Partikelfilter sollten vorteilhaft so verbaut sein, dass sie auswechselbar sind.

Wie bereits erwähnt, lassen sich nicht nur Hydrolysekatalysatoren oder Oxidationskatalysatoren, sondern auch andere Bestandteile des Abgasnachbehandlungssystems, wie alle Arten von Katalysatoren, Partikelfiltern oder Partikelabscheidern aber auch Rückschlagventile oder Absperrvorrichtung in einen oder mehrere Kompensatoren und/ oder den Teiles des Abgastrakts, der unlösbar mit den Kompensatoren verbunden ist, integrieren. Dies minimiert die Teilekosten und die Kosten für die Montage in vorteilhafter Weise.

Um ein schnelles Anspringen der Katalysatoren nach dem Start der Brennkraftmaschine zu gewährleisten (Kaltstart), ist es vorteilhaft, die Kompensatoren mit integrierten Bestandteilen des Abgasnachbehandlungssystems motornah zu verbauen, was auch der Funktion der Kompensatoren entgegen kommt.

Bei der Integration von Bestandteilen des Abgasnachbehandlungssystems in die Kompensatoren ist stets darauf zu achten, dass die Grundfunktion des Kompensators, nämlich die Schwingungen und Wärmedehnungen des Abgastrakts aufzunehmen, nicht beeinträchtigt wird. Werden beispielsweise Faltenbalge oder Wellschläuche, die große Querbewegungen ausgleichen können, eingesetzt, bedeutet dies, dass der äußere Durchmesser der Nachbehandlungskomponenten kleiner als der innere Durchmesser des Kompensators ausgeführt werden muss, da es ansonsten im Betrieb zum Kontakt zwischen Kompensator und Nachbehandlungssystem kommen kann. Dies führt innerhalb kürzester Zeit zu einer Beschädigung des Kompensators und/ oder des Abgasnachbehandlungssystems.

Wird mit Hilfe einer Schiebehülse nur die Längsbewegung des Abgastrakts ausgeglichen oder wird das Nachbehandlungssystem nur in die, dem Kompensator angrenzenden, Rohrstücke verbaut, kann das Nachbehandlungssystem fest anliegen. D.h. der äußere Durchmesser der Nachbehandlungskomponenten ist, abzüglich der Toleranzen, gleich dem inneren Durchmesser des Kompensators.

Nachfolgend wird die Erfindung mit Hilfe der Zeichnungen anhand einiger Beispiele näher erläutert, es zeigen:
- Fig. 1: Ein Abgasnachbehandlungssystem mit Teilstromhydrolyse nach dem Stand der Technik
- Fig. 2: Ein erstes SCR-System mit Teilstromhydrolyse für das Reduktionsmittel und einem Oxidationskatalysator zur Vermeidung von Rückströmungen im Teilstrom
- Fig. 3: Ein zweites SCR-System mit Teilstromhydrolyse für das Reduktionsmittel und einem Oxidationskatalysator zur Vermeidung von Rückströmungen im Teilstrom
- Fig. 4: Ein Abgasnachbehandlungssystem mit Teilstromhydrolyse und Rückströmsicherung im Teilstrom für Brennkraftmaschinen mit Turbolader
- Fig. 5: Ein Abgasnachbehandlungssystem mit einem motornahen und in einen Kompensator integriertem Startkatalysator und einem nachgeschalteten Hauptkatalysator
- Fig. 6: Draufsicht auf einen ein Kompensator, wobei der Kompensator als faltenbalgähnliches Wellrohr ausgebildet ist
- Fig.7: Schnitt durch den in Fig. 6 dargestellten Kompensator mit integriertem Katalysator, der unlösbar mit dem Kompensator verbunden ist, an der Schnittebene B-B
- Fig.8: Schnitt durch einen Kompensator und Katalysator, wobei der Katalysator lösbar mit dem Kompensator verbindbar ist
- Fig. 9: Draufsicht auf den in Fig. 8 dargestellten Kompensator mit ausgebautem Katalysator
- Fig. 10: Schnitt durch einen Kompensator und Katalysator, wobei der Kompensator als Schiebehülse ausgebildet ist

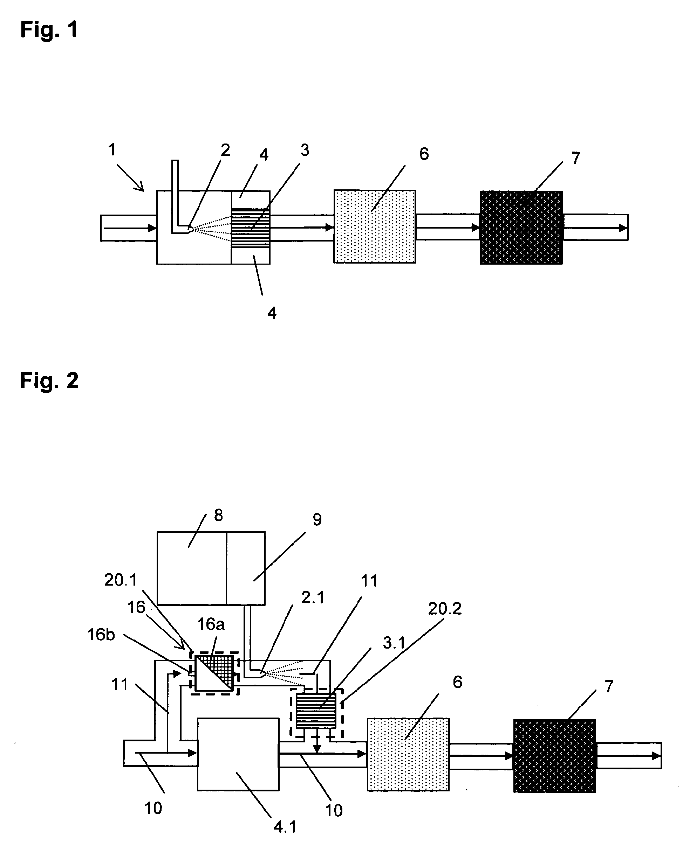

Zur Erläuterung der Zusammenhänge ist zunächst, in Fig. 1 schematisch dargestellt, eine Anordnung nach dem Stand der Technik gezeigt, mit der Stickoxide im Wege der selektiven katalytischen Reduktion aus dem Abgas einer Brennkraftmaschine entfernt werden.

Die von einer Brennkraftmaschine (nicht dargestellt) durch die Verbrennungsvorgänge erzeugten Abgase, in Fig. 1 durch die Pfeile symbolisiert, gelangen zunächst in einen Abgasaufbereitungstrakt 1, in welchem dem heißen Abgas ein Reduktionsmittel möglichst motornah beigegeben wird. Bei dem Reduktionsmittel handelt es sich, wie bei Kraftfahrzeugen mit SCR-Katalysator in der Praxis gebräuchlich, um eine wässrige Harnstofflösung, selbstverständlich ist aber auch die Zugabe von Harnstoff in fester Form denkbar, wie dies in der einschlägigen Fachliteratur bereits ausführlich beschrieben ist. Weiter ist es möglich, als Reduktionsmittel Ammoniak zuzugeben, der an anderer Stelle, z.B. unter günstigeren thermischen Bedingungen, aus einem Ammoniak abspaltenden Stoff gewonnen wird. Die Zumessung erfolgt in Abhängigkeit von Betriebsparametern der Brennkraftmaschine, gesteuert über eine Motorsteuereinheit (nicht dargestellt), in der Weise, dass über eine Düse 2 die wässrige Harnstofflösung unmittelbar vor einem Hydrolysekatalysator 3 in den Abgasstrom eingesprüht wird. Die Aufgabe des Hydrolysekatalysators 3 ist es, die wässrige Harnstofflösung unter Vermeidung von Nebenprodukten möglichst vollständig in Ammoniak und Wasserdampf überzuführen. Unter bestimmten Voraussetzungen erfolgt diese Aufspaltung auch ohne Hydrolysekatalysator hinreichend, so dass dieser dann entfallen kann. Parallel zum Hydrolysekatalysator 3 ist ein Oxidationskatalysator 4 angeordnet, dessen Aufgabe darin besteht, nach der vorstehend mit (2) bezeichneten Reaktion einen Teil des im Abgas enthaltenen Stickstoffmonoxids mittels des im Abgas vorhandenen überschüssigen Sauerstoffes zu Stickstoffdioxid aufzuoxidieren.

Die eigentliche selektive katalytische Reduktion der Stickoxide erfolgt in stromab zum Hydrolysekatalysator 3 gelegenen SCR-Katalysator 6, der einen möglichst großen Anteil der im Abgas vorhandenen Stickoxide (NO_{X}) bei gleichzeitiger hoher Selektivität der Reduktion in Stickstoff und Wasserdampf überführen soll, ohne dass überschüssiger Ammoniak (NH₃) im Abgasstrom verbleibt. Bei der angesprochenen SCR-Reaktion ist das im Abgasstrom vorhandene Stickstoffdioxid reaktionsfreudiger als das im Abgas enthaltene Stickstoffmonoxid, es ist demnach wünschenswert, den Oxidationskatalysator so auszulegen, dass ein möglichst hoher Anteil an Stickstoffmonoxid in Stickstoffdioxid übergeführt wird.

In Anbetracht der ständig wechselnden Betriebsbedingungen einer in einem Kraftfahrzeug betriebenen Brennkraftmaschine ist offensichtlich, dass die gewünschte möglichst hohe Umsetzungsrate an Stickoxiden nur dann sicher gelingen kann, wenn ein geringfügiger Ammoniaküberschuss in Kauf genommen wird. Um in Fällen ungenügender Umsetzung zu verhindern, dass giftiger Ammoniak mit dem teilgereinigten Abgas an die Außenluft abgegeben wird, ist dem SCR-Katalysator 6 ein NH₃-Oxidationskatalysator 7 nachgeordnet, mit dem das überschüssige NH₃ in Stickstoff und Wasserdampf übergeführt wird. Diese Oxidationsreaktion sollte möglichst selektiv ablaufen.

Wie bereits weiter oben angedeutet, kann dann, wenn das Temperaturniveau an der Zuführstelle für das Reduktionsmittel über den gesamten Betriebsbereich hoch ist, auf den Hydrolysekatalysator 3 verzichtet werden.

Ein Ausführungsbeispiel für das erfindungsgemäße Abgasnachbehandlungssystem ist in Fig. 2 gezeigt.

Die Anordnung bedient sich ebenfalls der Teilstromhydrolyse, dazu ist vom Abgasstrom 10 ein Abgasteilstrom 11 abgezweigt, in den das Reduktionsmittel, in diesem Beispiel wässrige Harnstofflösung (AdBlue), beigegeben wird. Die Zumessung erfolgt durch eine in Abhängigkeit von Betriebsparametern der Brennkraftmaschine gesteuerte Zumesseinrichtung 9, die die wässrige Harnstofflösung aus einem Vorratsbehälter 8 entnimmt und über eine Düse 2.1, je nach Betriebszustand der Brennkraftmaschine, in vorgegebenen Mengen in den Abgasstrom einspritzt. Stromab zur Zuführstelle ist ein Hydrolysekatalysator 3.1 im Abgasstrom angeordnet, der, wie weiter oben bereits ausgeführt, die Hydrolyse des Reduktionsmittels fördert. Die Rückführung des nunmehr mit Ammoniak beladenen Abgasteilstroms 11 erfolgt stromab zum Hydrolysekatalysator 3.1 und stromauf zu dem im Abgasstrom 10 angeordneten SCR-Katalysaror 6, dem ein NH₃-Oxidationskatalysator 7 nachgeordnet ist. SCR-Katalysator 6 und NH₃-Oxidationskatalysator 7 sind identisch mit den bereits in Figur 1 beschriebenen, so dass sich eine nochmalige Beschreibung ihrer Funktion erübrigt, es wird stattdessen auf die einschlägigen Beschreibungsteile zur Figur 1 verwiesen.

Wie bereits ausgeführt, kann bei bestimmten Betriebszuständen der Brennkraftmaschine, hauptsächlich im Schwachlast-, Schub-, Motorbremsbetrieb, in Leerlaufphasen oder beim Abstellen des Motors, eine Umkehr der Strömungsrichtung des Abgases eintreten. Um in solchen Fällen zu verhindern; dass Reduktionsmittel, aus dem Reduktionsmittel abgespaltener Ammoniak und/ oder aus dem Reduktionsmittel gebildete Nebenprodukte, wie beispielsweise Isocyansäure (Gleichung 9), Cyanursäure (Gleichung 10) usw., durch Rückströmungen und/oder Diffusion in Richtung Motorblock, mit den abgasberührten Teilen des Motors in Berührung kommen, ist im Abgasteilstrom 11, stromauf zur Zuführstelle für das Reduktionsmittel, ein Oxidationskatalysator 16 angeordnet. Dieser ist hinsichtlich seiner Aktivkomponente so ausgelegt, dass er zurückströmendes Reduktionsmittel, aus dem Reduktionsmittel abgespaltenen Ammoniak oder aus dem Reduktionsmittel gebildete Nebenprodukte oxidiert. Die Auswahl der Aktivkomponenten des Oxidationskatalysators ist dabei so getroffen, dass die Oxidation von Ammoniak möglichst selektiv abläuft. Als Aktivmaterialien für den Oxidationskatalysator 16 bieten sich Platin, Palladium, Iridium, deren Oxide, IrTiO_{X} und Zeolithe an, bei der Auslegung ist zu beachten, dass ein hoher Platinanteil zwar für einen möglichst hohen Umsatz förderlich ist, aber die Selektivität der Reaktion negativ beeinflusst.

Da die Harnstoffzersetzung bei hohen Temperaturen beschleunigt abläuft, ist es vorteilhaft, den Hydrolysekatalysator und dadurch auch den Oxidationskatalysator 16 motornah anzuordnen. Da die Kompensatoren üblicherweise ebenfalls motornah verbaut werden, bietet sich eine Integration der beiden oben erwähnten Katalysatoren in den Kompensatoren an.

In Erweiterung der Funktion des Oxidationskatalysators 16 ist dieser so ausgebildet, dass er entlag der Strömungsrichtung des Abgases gesehen unterschiedliche Eigenschaften aufweist, derart, dass die der Zuführstelle für das Reduktionsmittel benachbarte Seite 16a Ammoniak bevorzugt selektiv zu Stickstoff und Wasser oxidiert, während die gegenüberliegende Seite 16b dagegen im Abgas mitgeführtes Kohlenmonoxid und/ oder Stickstoffmonoxid und/ oder mitgeführte Kohlenwasserstoffe umsatzoptimiert oxidiert. Dies lässt sich vorteilhaft dadurch erreichen, dass die der Zuführstelle für das Reduktionsmittel benachbarte Seite 16a eine höhere Beladung mit Palladium und/ oder Iridium und/ oder Zeolithen aufweist, als die der Brennkraftmaschine zugewandte Seite 16b. Der gleiche Effekt ist dadurch erreichbar, dass die der Zuführstelle für das Reduktionsmittel benachbarte Seite 16a des Oxidationskatalysators eine niedrigere Beladung mit Platin und/ oder dessen Oxiden aufweist, als die der Brennkraftmaschine zugewandte Seite 16b.

Wie bereits ausgeführt, erfolgt die Rückführung des Abgasteilstroms 11 in den Abgasstrom 10 stromauf zum SCR-Katalysator 6. Die Rückführstelle soll dabei möglichst unmittelbar vor dem SCR-Katalysator liegen, um zu vermeiden, dass mit Ammoniak beladenes Abgas im Abgasstrom 10 zurückströmt. Sollte es dennoch zu geringen Rückströmungen im Abgasstrom 10 kommen, wird der zurückströmende Ammoniak durch den parallel zum Abgasteilstrom 11 im Abgasstrom 10 angeordneten weiteren Oxidationskatalysator 4.1 oxidiert. Der weitere Oxidationskatalysator 4.1 dient der Anhebung des Anteils von Stickstoffdioxid im Abgasstrom 10, um den in der SCR-Reaktion erzielbaren Umsatz an Stickoxiden zu verbessern und ist deshalb parallel zum Abgasteilstrom 11 angeordnet, weil so das Temperaturniveau im Abgasteilstrom 11 und insbesondere an der Zuführstelle für das Reduktionsmittel nicht negativ beeinflusst wird. Dies wäre der Fall, wenn man den relativ großen weiteren Oxidationskatalysator 4.1 stromauf zum Abgasteilstrom 11 anordnen würde.

Bei dieser Anordnung bietet sich die Integration des Oxidationskatalysators 16 und des Hydrolysekatalysators 3 in Kompensatoren 20.1 und 20.2 an.

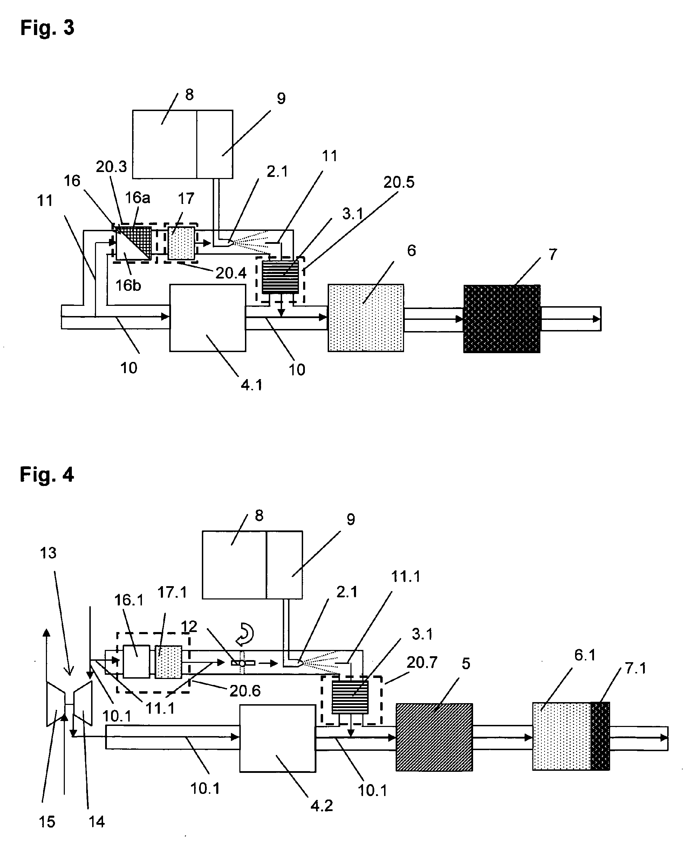

Bei der Oxidation von Ammoniak an dem stromauf zur Zuführstelle für das Reduktionsmittel angeordneten Oxidationskatalysator 16 ist angestrebt, dass die Reaktion selektiv erfolgt, also bis zur Oxidationsstufe 0 läuft (Gleichung (11)). Allerdings gelingt dies nicht immer selektiv, so dass die Oxidation oft bis zur Oxidationsstufe [+1] (Lachgas - N₂O), [+2] (Stickstoffmonoxid - NO) oder gar [+4] (Stickstoffdioxid - NO₂) weiterläuft (Gleichungen (12) bis (15)), wie dies bereits oben ausgeführt ist. Für Abhilfe sorgt eine Anordnung nach Fig. 3. Die dort gezeigte Anordnung unterscheidet sich von der Anordnung nach Figur 2 lediglich dadurch, dass stromab zum Oxidationskatalysator 16 und stromauf zur Zuführungsstelle für das Reduktionsmittel im Abgasnebenstrom 11 ein weiterer SCR-Katalysator 17 angeordnet ist. Dieser führt eventuell zurückströmenden Ammoniak mit Hilfe von im Abgas enthaltenem Stickstoffmonoxid und Restsauerstoff nach Gleichung (1) bzw. mit Hilfe von Stickstoffmonoxid und Stickstoffdioxid nach Gleichung (3) hoch selektiv in Stickstoff und Wasserdampf über. Erst wenn die Stickoxide im Abgas aufgebraucht sind, erfolgt die Oxidation des Ammoniaks mit Hilfe des Oxidationskatalysators 16.

Bei dieser Anordnung bietet sich die Integration des Oxidationskatalysators 16, des SCR-Katalysators 17 und des Hydrolysekatalysators 3 in getrennte Kompensatoren 20.3, 20.4 und 20.5 an.

Nach dem, mit Ausnahme des Vorstehenden, die Bauteile und Funktionen der Anordnung nach Figur 3 identisch mit den zu Figur 2 beschriebenen sind, wird hierzu auf die einschlägigen Beschreibungsteile zur Figur 2 verwiesen.

Bei heute in Nutzfahrzeugen betriebenen Brennkraftmaschinen ist häufig eine wenigstens einstufige Turboladeranordnung vorhanden, die mit Hilfe der im Abgasstrom enthaltenen Abgasenthalpie, die der Brennkraftmaschine zugeführte Verbrennungsluft verdichtet. Für die Abgasnachbehandlung wirft dies deshalb Probleme auf, weil das über die Turbinen des oder der Abgasturbolader strömende Abgas durch diese zwangsläufig stark abgekühlt wird. Ein solchermaßen abgekühlter Abgasstrom ist insbesondere im Anfahrbetrieb und im unteren Teillastbereich nicht in der Lage, für die Hydrolyse des Reduktionsmittels ausreichende Abgastemperaturen zu erreichen. Selbst wenn Hydrolysekatalysatoren eingesetzt werden, reicht das Temperaturniveau zumeist nicht aus. Abhilfe für dieses Problem schafft die Anordnung nach Fig. 4. Wie dort gezeigt, verzweigt der von der Brennkraftmaschine (nicht dargestellt) kommende Abgasstrom bereits vor der Turbine 14 des Abgasturboladers 13 in der Weise, dass daraus ein Abgasteilstrom 11.1 entnommen wird, während das restliche Abgas über die Turbine 14 geführt ist, über diese den Verdichter 15 antreibt und als Abgasstrom 10.1 den Turbolader verlässt.

Die Hydrolyse des Reduktionsmittels erfolgt auch bei diesem Beispiel im Abgasteilstrom 11.1, dazu wird mit einer Dosiereinrichtung bestehend aus Vorratsbehälter 8, Zumesseinrichtung 9 und Düse 2.1 das Reduktionsmittel in Abhängigkeit von Betriebsparametern der Brennkraftmaschine in den Abgasteilstrom 11.1 zugeführt. Durch die im Abgasteilstrom 11.1 herrschende relativ hohe Abgastemperatur und den der Zuführstelle nachgeordneten Hydrolysekatalysator, kann das Reduktionsmittel ohne den Anfall problematischer Reaktionsprodukte, wie Cyanursäure, Ammoniak abspalten.

Parallel zum Abgasteilstrom 11.1 wird der vom Abgasturboladers 13 kommende Abgasstrom 10.1 über einen Oxidationskatalysator 4.1 geführt, der, ebenso wie bei den vorhergehend beschriebenen Beispielen, im Abgasstrom 10.1 enthaltenes Stickstoffmonoxid zu Stickstoffdioxid oxidiert. Stromab zum Oxidationskatalysator 4.1 erfolgt die Rückführung des Abgasteilstroms 11.1 in den Abgasstrom 10.1. Auf Grund der großen Temperaturdifferenzen zwischen dem Haupt- und dem Teilstrom, ist der Verbau von Kompensatoren unumgänglich. Dabei können sowohl der Hydrolysekatalysator, als auch die Oxidationskatalysatoren zur Oxidation von NO 4.1 und/oder die Katalysatoren zur Oxidation von Harnstoffzersetzungsprodukten 16.1 in Kompensatoren integriert sein.

Das aus dem Abgasteilstrom 11.1 kommende mit Ammoniak beladene Abgas und das mit Stickstoffdioxid angereicherten Abgas aus dem Abgasstrom 10.1 durchströmen sodann einen dem Rückführpunkt nachgeordnete Partikelabscheider 5, der einerseits für eine Durchmischung und homogene Verteilung der im Abgas enthaltenen Bestandteile sorgt und andererseits Rußpartikel aus dem Abgas anlagert, die mit Hilfe des im Oxidationskatalysatoren 4.1 erzeugten Stickstoffdioxids kontinuierlich zu Kohlenmonoxid, Kohlendioxid, Stickstoff und Stickstoffmonoxid umgesetzt werden. Dem Partikelabscheider ist ein SCR-Katalysator 6.1 nachgeordnet, der im Wege der selektiven katalytischen Reduktion die im Abgas vorhandenen Stickoxide in Stickstoff und Wasserdampf überführt. Zur Vermeidung von Ammoniakschlupf ist der SCR-Katalysator 6.1 in seinem stromab gelegenen Bereich mit einem einen NH₃-Oxidationskatalysator 7.1 ausbildenden Aktivmaterial beschichtet.

Die Vermeidung von Schäden an den abgasberührenden Teilen der Brennkraftmaschine durch bei bestimmten Betriebszuständen zurückströmendes Abgas, das mit aus dem Reduktionsmittel abgespaltenem Ammoniak bzw. bei der Abspaltung gebildeten Nebenprodukten beladen ist, erfolgt mittels einer zwischen dem Abzweig des Abgasteilstroms 11.1 und der Zuführstelle des Reduktionsmittels angeordneten Kombination aus einem Oxidationskatalysator 16.1 und einem SCR-Katalysator 17.1, der in der normalen durch die Pfeile angedeuteten Strömungsrichtung des Abgases gesehen, dem Oxidationskatalysator 16.1 nachgeordnet ist. Dabei wirkt der in der Kombination vorgesehene Oxidationskatalysator 16.1 in der normalen, durch die Pfeile angedeuteten Strömungsrichtung des Abgases in der Weise, dass er Stickstoffmonoxid in Stickstoffdioxid umsetzt. Kommt es dagegen zu einer Umkehr der Abgasströmung, z. B. im Motorbremsbetrieb, wird der im Abgas enthaltene Ammoniak beim Durchströmen des SCR-Katalysators 17 mit Hilfe der im Abgas enthaltenen Stickoxide bzw. des Restsauerstoffes nach den Gleichungen (1) und (3) in Stickstoff und Wasserdampf übergeführt. Sind keine Stickoxide mehr im Abgas vorhanden, erfolgt die Oxidation zurückströmenden Ammoniaks im Oxidationskatalysator 16.1.

Um bei länger andauernden Rückströmphasen die vorstehend angesprochene Kombination aus SCR-Katalysator 17.1 und Oxidationskatalysator 16.1 zu entlasten, ist zwischen dem SCR-Katalysator 17.1 und der Zuführstelle für das Reduktionsmittel ein mittels einer Motorsteuereinrichtung (nicht dargestellt) in Abhängigkeit von Betriebsparametern der Brennkraftmaschine ansteuerbares Absperrorgan 12 vorgesehen. Die Betriebsparameter der Brennkraftmaschine, bei denen eine Absperrung erfolgt, können von der Motorsteuereinheit mittels Sensoren und/ oder mittels in der Motorsteuereinheit gespeicherter Kennfelder ermittelt werden.

Das Absperrorgan 12 kann darüber hinaus in den Betriebszuständen, in denen das Abgas in der normalen Strömungsrichtung, also in der durch die Pfeile angedeuteten Richtung strömt, zur Steuerung oder Regelung des Massenstroms bzw. der Abgasmenge im Abgasteilstrom 11.1 herangezogen werden. Dazu erfolgt in Abhängigkeit von Betriebsparametern der Brennkraftmaschine stufenlos oder in diskreten Schritten ein Drosseln des Abgasteilstroms 11.1. Die so erreichte Variierbarkeit des Abgasteilstroms erlaubt es, die für SCR-Reaktion benötigte Ammoniakkonzentration im Abgas noch genauer zu steuern.

Da der Oxidationskatalysator 16.1 und der SCR-Katalysator 17.1 sehr motornah verbaut ist, bietet es sich an, die beiden Katalysatoren in einem gemeinsamen Kompensator 20.6 zu integrieren. Der stromab der Eindüsstelle angebrachte Hydrolysekatalysator 3.1 ist demgegenüber in einem separaten Kompensator 20.7 verbaut.

In Abweichung zum Beispiel nach Figur 4 kann das Absperrorgan 12 natürlich auch an jeder beliebigen anderen Stelle zwischen dem Abzweig des Abgasteilstroms 11.1 und der Zuführstelle des Reduktionsmittels angeordnet sein. Weiter ist es denkbar, ein entsprechendes Absperrorgan auch bei den Anordnungen nach den Figuren 2 und 3 vorzusehen. In Vereinfachung der Anordnung besteht schließlich die Möglichkeit, statt des gesteuerten oder geregelten Absperrorgans 12 ein einfaches Rückschlagventil vorzusehen, das bei Strömungsumkehr in Abgasteilstrom 11.1 schließt.

Selbstverständlich können das Absperrorgan 12 bzw. das Rückschlagventil in den Kompensator 20.6 integriert sein, gleiches gilt natürlich für die Düse 2.1 diese kann sich z.B. zusammen mit dem Hydrolysekatalysator 3.1 im Kompensator 20.7 befinden.

Handelt es sich bei der Turbine 14 in Abweichung zum Beispiel nach Figur 4 um eine zweiflutig gespeiste Turbine, wobei die eine Flut von einer ersten Anzahl von Zylinder und die andere Flut von einer zweiten Anzahl von Zylinder mit Abgas beschickt wird, ist es vorteilhaft, den Abgasteilstrom von einer der beiden Fluten abzuzweigen. Die Zylinder der Flut, von der der Abgasteilstrom abzweigt, können dann mit anderen Motorparametern (z.B. Kraftstoffeinspritzzeiten- oder mengen) betrieben werden, als die Zylinder der anderen Flut, so dass in vorteilhafter Weise eine Optimierung der Verhältnisse im Abgasteilstrom hinsichtlich der Aufbereitung des Reduktionsmittels möglich wird, indem beispielsweise die Abgastemperatur in der Startphase oder im Niedriglastbereich, z. B. durch eine Nacheinspritzung im Expansions- oder Ausschubtakt, angehoben wird.

Bei Brennkraftmaschinen mit zwei Zylinderbänken, die üblicherweise für jede der Zylinderbänke einen eigenen Abgasturbolader aufweisen, so dass die Turbine des einen Abgasturboladers von der einen Zylinderbank der Brennkraftmaschine und die Turbine des anderen Abgasturboladers von der anderen Zylinderbank der Brennkraftmaschine mit Abgas beschickt wird, ist es vorteilhaft, den Abgasteilstrom vor der Turbine eines der beiden Abgasturbolader vom Abgasstrom abzuzweigen. Die Zylinder der Zylinderbank von deren Abgastrakt der Abgasteilstroms abzweigt, können dann mit anderen Motorparametern (z.B. Kraftstoffeinspritzzeiten- oder mengen) betrieben werden, als die Zylinder der anderen Zylinderbank, so dass auch hier in vorteilhafter Weise eine Optimierung der Verhältnisse im Abgasteilstrom hinsichtlich der Aufbereitung des Reduktionsmittels möglich wird, indem beispielsweise die Abgastemperatur in der Startphase oder in Niedriglastbereich, z. B. durch eine Nacheinspritzung im Expansions- oder Ausschubtakt, angehoben wird.

Hinsichtlich der in den vorstehenden Beispielen angesprochenen Katalysatoren ist anzumerken, das es sich um Vollkatalysatoren und/oder Beschichtungskatalysatoren handeln, die Aktivkomponenten der Katalysatoren können auf keramische und/oder metallische und/oder silikathaltige und/oder quarzhaltige Träger aufgebracht sein. Herstellbar sind derartige Katalysatoren mit Hilfe vieler bekannter Herstellverfahren, es wird hierzu ausdrücklich auf die einschlägige Fachliteratur verwiesen.

Für die in den vorstehenden Beispielen angesprochenen Oxidationskatalysatoren zur Oxidation von Ammoniak sowie die weiteren Oxidationskatalysatoren lassen sich Platin und/oder Palladium und/oder Iridium und/oder deren Oxide und/oder IrTiO_{X} und/oder Zeolithe als Aktivmaterialien einsetzen. Als Aktivkomponenten für die SCR-Katalysatoren zur Reduktion von Stickoxiden mit Hilfe von Ammoniak kommen Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe zum Einsatz. Für den Hydrolysekatalysator zur Verbesserung der Freisetzung von Ammoniak können als Aktivkomponenten Titandioxid und/oder Siliziumdioxid und/oder Aluminiumoxid und/oder Zeolithe zur Anwendung kommen.

Zudem kann es sinnvoll sein, mehrere Katalysatoren und/oder Partikelabscheider in einem gemeinsamen Gehäuse unterzubringen, um Bauraum einzusparen und Kosten zu verringern.

Da es beim Einsatz von Partikelabscheidern oder Partikelfiltern zu einer Verstopfung der Abscheider bzw. Filter durch Ölasche kommen kann, ist es sinnvoll, die Filter so zu verbauen, dass diese auswechselbar und damit leicht zu reinigen sind.

Um das Abgasnachbehandlungssystem in seinem optimalen Betriebsbereich zu betreiben, kann die Abgastemperatur und/oder der Gehalt an Stickstoffdioxid an den Vorrichtungen zur Abscheidung von Partikeln durch Verstellen von Motorparametern und/oder durch Anheben der Kohlenwasserstoffkonzentration mit Hilfe einer Verstellung von Motorparametern, wie den Kraftstoffeinspritzzeiten oder -mengen, und/oder durch Zuführung von Kohlenwasserstoffen in den Abgasstrom stromauf der Katalysatoren zur Oxidation von Stickstoffmonoxid, die gleichzeitig die Oxidation von Kohlenwasserstoffen und/oder Kohlenmonoxid bewirken, verändert werden.

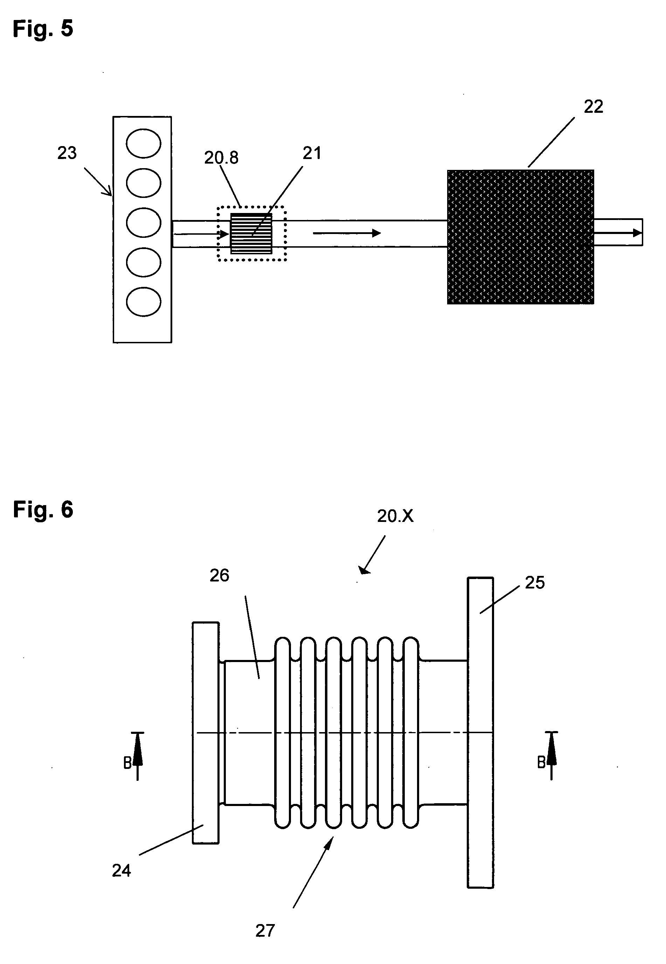

In Figur 5 ist die Aufteilung des Nachbehandlungssystems in einen nah an der Brennkraftmaschine 23 verbauten, kleinen Startkatalysator 21 und einen nachgeschalteten Hauptkatalysator 22 zu sehen, wobei beide vom selben Katalysatortyp, wie z.B. Drei-Wege-Katalysatoren, sein können. Die Aufteilung soll dazu dienen, bereits kurz nach dem Motorstart die Anspringtemperatur des Nachbehandlungssystems durch ein schnelles Aufheizen des Startkatalysators zu erreichen. Da der Start- und der Hauptkatalysator deutlich unterschiedlichen thermischen Belastungen ausgesetzt sind, unterscheiden sich üblicherweise deren Katalysatorzusammensetzungen, auch wenn sie vom selben Katalysatortyp sind. Bei dieser Anordnung bietet sich die Integration des kleinen Startkatalysators in den Kompensator 20.8 an.

Die vorstehend in Verbindung mit den Figuren 2 bis 5 angesprochenen Kompensatoren 20 bis 20.8 können, wie oben ausgeführt, auf unterschiedliche Art realisiert sein, einige Beispiele dazu werden nachfolgend erläutert.

Eine faltenbalgähnliche Anordnung eines Kompensators 20.X zeigt Figur 6. Dabei werden die Anschlussbereiche mit denen der Kompensator 20.X mit der Abgasverrohrung (nicht dargestellt) verbunden ist durch einen ersten Flansch 24 und einen zweiten Flansch 25 gebildet. Zwischen den Flanschen 24, 25 erstreckt sich ein Verbindungsrohr 26, das in seinem mittleren Bereich einen federbalgartig geformten Wellrohrabschnitt 27 aufweist. die beiden Flansche 24, 25 sind mit dem Verbindungsrohr 26 fest verbunden, so dass bei in der Abgasverrohrung (nicht dargestellt) montiertem Kompensator 20.X, dann wenn sich die mit dem Kompensator 20.X verbundenen Abgasverrohrungsabschnitte relativ zueinander in einer beliebigen Richtung bewegen, diese Bewegung durch den Wellrohrabschnitt ausgeglichen wird.

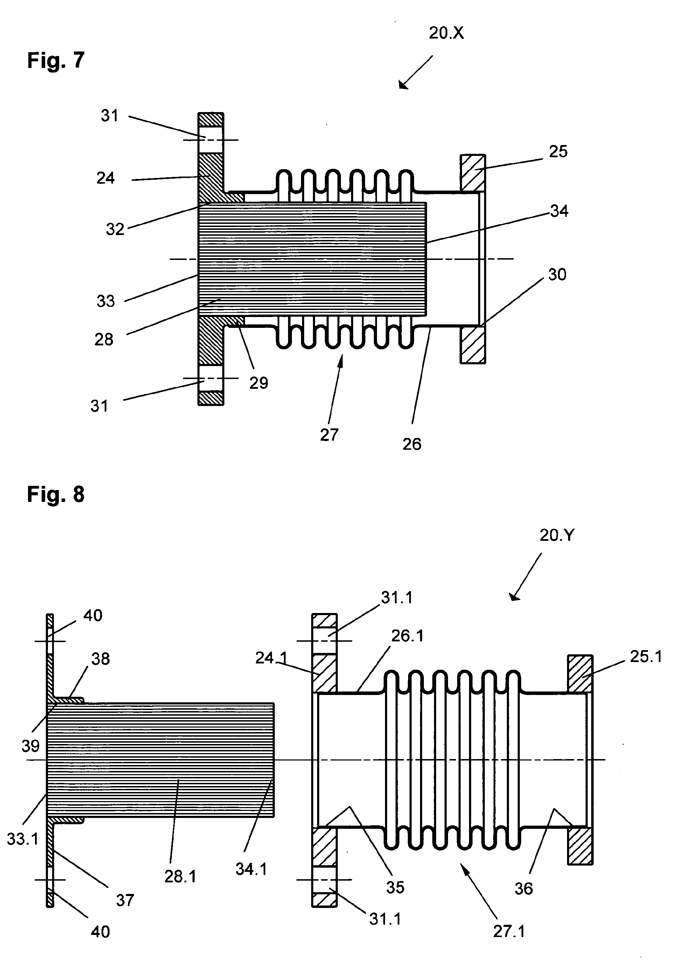

In einem Schnitt durch den Kompensator 20.X gemäß Figur 6 entlang der Linie B - B ist in Fig. 7 die Befestigung eines Katalysators 28 in dem Kompensator 20.X gezeigt. Wie im Schnitt erkennbar, erstreckt sich das Verbindungsrohr 26 zwischen den Flanschen 24, 25 und ist einerseits auf einen an dem ersten Flansch 24 angeordneten zylinderförmigen Ansatz 29 aufgeschoben und mit diesem, z.B. durch Verschweißen formschlüssig verbunden. Andererseits steckt das Verbindungsrohr 26 mit seinem anderen Ende in einer Ausnehmung 30, die sich im zweiten Flansch 25 befindet. Auch zwischen dem zweiten Flansch 25 und dem Verbindungsrohr 26 ist eine formschlüssige Verbindung, z.B. durch Verschweißen geschaffen. Der Katalysator 28 ist an seinem einen Ende 33 in eine Öffnung 32 eingeschoben, die den ersten Flansch 24 und den daran angeordneten zylinderförmigen Ansatz 29 zentrisch durchsetzt und ist in dieser Ausnehmung 32 formschlüssig befestigt. Das freie Ende 34 des Katalysators 28 ragt in das Verbindungsrohr 26 hinein und ist gegenüber der Innenwand des Verbindungsrohres 26 beabstandet, so dass sich bei Relativbewegungen zwischen dem ersten Flansch 24 und dem zweiten Flansch 25 kein Kontakt zwischen dem Katalysator 28 und dem Verbindungsrohr 26 ergibt. Ebenfalls in Figur 7 sichtbar sind Bohrungen 31 im ersten Flansch 24, die der Befestigung des Kompensators 20.X an der Abgasverrohrung (nicht dargestellt) mittels Schrauben (nicht dargestellt) dienen.

Eine Ausführung eines Kompensator 20.Y bei dem der darin angeordnete Katalysator leicht demontierbar ist, zeigt Fig. 8 ebenfalls in Schnittdarstellung. Auch in diesem Fall sind ein erster Flansch 24.1 und ein zweiter Flansch 25.1 mittels eines Verbindungsrohres 26.1 verbunden, das in seinem mittleren Bereich einen federbalgartig geformten Wellrohrabschnitt 27.1 aufweist. Der erste Flansch 24.1 und der zweite Flansch 25.1 weisen jeweils zentrisch Ausnehmungen 35, 36 auf in die das Verbindungsrohr 26.1 mit seinen jeweiligen Enden eingesteckt und formschlüssig mit den Flanschen 24.1, 25.1 verbunden ist.

In demontierter Position ist ein Katalysator 29.1, in Fig. 8 links dargestellt, in einem weiteren Flansch 37 angeordnet, der einen Ansatz 38 aufweist. Flansch 37 und Ansatz 38 sind zentrisch von einer Ausnehmung 39 durchsetzt, in der der Katalysator 29.1 formschlüssig angeordnet ist. zur Befestigung des Katalysators 29.1 im Kompensator 20.Y sind im weiteren Flansch 37 Durchgangsbohrungen 40 angeordnet, die im montierten Zustand des Katalysators mit den Bohrungen 31.1 in dem ersten Flansch 24.1 fluchten. Die Bohrungen 31.1 und die Durchgangsbohrungen 40 dienen dabei gleichzeitig der Befestigung des Katalysators 28.1 im Kompensator 20.Y und der Befestigung dieser Anordnung an der Abgasverrohrung (nicht dargestellt).

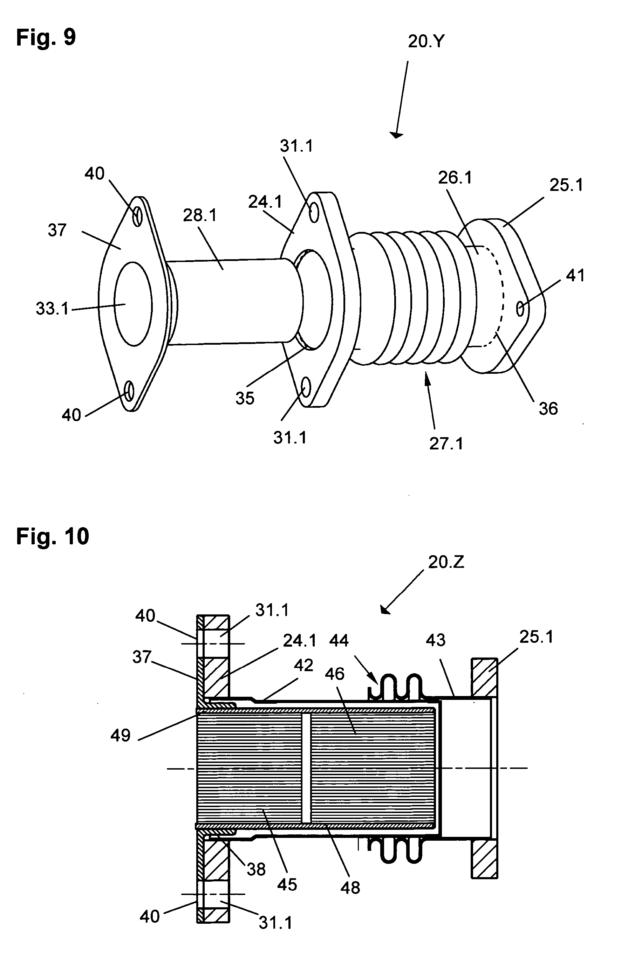

Eine perspektivische Darstellung der vorstehend beschriebenen Figur 8 ist in Fig. 9 gezeigt. Nachdem die Anordnungen in den Figuren 8 und 9 identisch sind, gilt dies auch für die Bezugszeichen. Es wird in Verbindung mit Figur 9 nur auf die Merkmale eingegangen, die in dieser Darstellungsform zusätzlich sichtbar sind, darüber hinaus wird auf die Beschreibung zu Figur 8 verwiesen.

In Fig. 9 ist erkennbar, dass die Flansche 24.1 und 25.1 um 90° gegeneinander verdreht sind, dies dient der besseren Montierbarkeit, weil sich die Flansche nicht gegenseitig im Weg sind. Die Befestigung des zweiten Flansches 25.1 an der daran anschließenden Abgasverrohrung (nicht dargestellt) erfolgt über die Bohrungen 41, über die der Flansch 25.1 an einem entsprechenden Gegenstück an der Abgasverrohrung (nicht dargestellt) mittels Schrauben befestigt ist.

Eine weitere Art eines Kompensators ist in Fig. 10 geschnitten dargestellt. Nachdem die gezeigte Anordnung sich von der Anordnung nach Figur 8 und 9 nur in einigen Punkten unterscheidet wird nur auf diese Unterschiede eingegangen, Gleichteile zum Beispiel nach Figuren 8 und 9 sind mit gleichen Bezugszeichen versehen, zur Beschreibung dieser Teile wird auf diese Figuren verwiesen.

Die Anordnung nach Figur 10 zeigt einen als Schiebehülse ausgeführten Kompensator 20.Z. Die Schiebehülse wird dabei durch ein erstes Rohrstück 42 und ein im Innendurchmesser dem Außendurchmesser des ersten Rohrstückes 42 entsprechendes zweites Rohrstück 43 gebildet. Das zweite Rohrstück 43 ist auf das erste Rohrstück 42 aufgeschoben, wobei der auf das erste Rohrstück 42 aufgeschobene Teil 44 des zweiten Rohrstücks 43 wellrohrförmig ausgeführt ist. Die wellrohrförmige Ausbildung dient einerseits dazu, den Kontakt zwischen beiden Rohrteilen zu minimieren um eine verbesserte Gleitfähigkeit der beiden Rohrstücke zueinander zu erreichen, andererseits wird dadurch eine ausreichende Abdichtwirkung erzielt. Das erste Rohrstück 42 ist am ersten Flansch 24.1 und das zweite Rohrstück am zweiten Flansch 25.1 formschlüssig, durch Verlöten oder durch Verschweißen befestigt. Der Kompensator 20.Z lässt nur Relativbewegungen der Rohrstücke 42, 43 in deren Axialrichtung zu.

Weiter unterscheidet sich die Katalysatoranordnung nach Figur 10 von der nach Figur 8 dadurch, dass es sich beim Beispiel nach Figur 10 um eine Kombination aus einem ersten Katalysator 45 und einen zweiten Katalysator 46 handelt. Beide sind in einem Trägerrohr 48 angeordnet, das mit seinem einen Ende 49 in dem weiteren Flansch 37 formschlüssig gelagert ist. Bei dem ersten Katalysator 45 kann es sich dabei um einen Oxidationskatalysator und bei dem zweiten Katalysator 46 um einen SCR-Katalysator handeln, wie sie nach den Beispielen gemäß Figuren 3 und 4 im Abgasteilstrom des Abgasnachbehandlungssystems benachbart zueinander angeordnet sind.

Die vorstehend beschriebenen Ausführungen lassen sich selbstverständlich mit dem Fachmann zugänglichem Fachwissen auf vielfältige Weise ausgestalten, ohne den grundlegenden erfinderischen Gedanken zu verlassen, den beschriebenen Ausführungsformen kommt somit nur Beispielcharakter zu.

## Patentansprüche

1. Vorrichtung zur Umsetzung von Abgasbestandteilen einer Brennkraftmaschine mittels wenigstens eines Katalysators und/ oder Partikelfilters und/ oder Partikelabscheiders als Nachbehandlungskomponenten und zum Ausgleich von Relativbewegungen zwischen der Brennkraftmaschine und dem Abgastrakt und/ oder von Relativbewegungen unterschiedlicher Teile des Abgastraktes mittels wenigstens eines die Relativbewegungen zulassenden Kompensators, wobei
- der wenigstens eine Katalysator zur Umsetzung von Abgasbestandteilen und/ oder der wenigstens eine Partikelfilter und/oder der wenigstens eine Partikelabscheider innerhalb des Kompensators (20.1 - 20.8, 20.X, 20.Y, 20.Z) und/oder innerhalb eines Teiles des Abgastrakts, der unlösbar mit dem Kompensator verbunden ist, angeordnet ist,
- der Außendurchmesser des Katalysators und/ oder des Partikelfilters und/ oder des Partikelabscheiders kleiner oder gleich dem Innendurchmesser des Kompensators (20.1
- 20.8, 20.X, 20.Y, 20.Z) und/oder dem Teil des Abgastrakts ist, der unlösbar mit dem Kompensator verbunden ist
**dadurch gekennzeichnet, dass**
- stromauf zum einem SCR-Katalysator (6, 6.1) ein Abgasteilstrom (11, 11.1) vom Abgasstrom (10, 10.1) abzweigt,
- ein Vorratsbehälter (8) für ein Reduktionsmittel und eine Zumesseinrichtung (9) für ein Reduktionsmittel vorgesehen sind und wobei die Zumesseinrichtung (9) das Reduktionsmittel in den Abgasteilstrom (11, 11.1) zugibt,
- das Reduktionsmittel ein stromab der Zuführstelle durch das heiße Abgas Ammoniak abspaltender Stoff ist oder das Reduktionsmittel Ammoniak ist,
- der Abgasteilstrom (11, 11.1) stromab zur Zuführstelle und stromauf zum SCR-Katalysator (6, 6.1) in den Abgasstrom (10, 10.1) zurückgeführt ist,
- der stromab zur Rückführstelle angeordnete SCR-Katalysator (6, 6.1) die im Abgasstrom enthaltenen Stickoxide mit Hilfe des abgespaltenen Ammoniaks im Wege der selektiven katalytischen Reduktion zu Stickstoff und Wasserdampf reduziert,
- im Abgasteilstrom (11, 11.1) stromauf zu der Zuführstelle für das Reduktionsmittel ein Oxidationskatalysator (16, 16.1) angeordnet ist, der bei den Motorbetriebsbedingungen bei denen eine Umkehr des Abgasstroms in Richtung Brennkraftmaschine gegeben ist, zurückströmenden Ammoniak und/ oder zurückströmende Reduktionsmittelzersetzungsprodukte oxidiert,
- der Oxidationskatalysator (16, 16.1) innerhalb des wenigstens einen Kompensators (20.1, 20.3, 20.6, 20.X, 20.Y, 20.Z) und/oder innerhalb eines Teiles des Abgastrakts, der unlösbar mit dem Kompensator verbunden ist, angeordnet ist, wobei
- der äußere Durchmesser der wenigstens einen, in den Kompensator hineinragenden Nachbehandlungskomponente kleiner oder gleich dem inneren Durchmesser des Kompensators ist.

2. Vorrichtung nach Anspruch 1, **dadurch gekennzeichnet, dass** der Oxidationskatalysator (16, 16.1) so ausgebildet ist, dass er neben dem zurückströmenden Ammoniak und/ oder den zurückströmenden Reduktionsmittelzersetzungsprodukten, bei den Motorbetriebsbedingungen bei denen das Abgas von der Brennkraftmaschine weg strömt, im Abgas mitgeführtes Kohlenmonoxid und/ oder Stickstoffmonoxid und/ oder mitgeführte Kohlenwasserstoffe oxidiert.

3. Vorrichtung nach den Ansprüchen 1 oder 2, **dadurch gekennzeichnet, dass** im Abgasteilstrom (11, 11.1) stromab zum Oxidationskatalysator (16, 16.1) und stromauf zur Zuführstelle für das Reduktionsmittel ein zusätzlicher SCR-Katalysator (17, 17.1) zur selektiven Reduktion von Stickoxiden mit Hilfe von zurückströmendem Ammoniak angeordnet ist, und dass der zusätzliche SCR-Katalysator (17, 17.1) innerhalb des wenigstens einen Kompensators (20.4, 20.6, 20.X, 20.Y, 20.Z) und/oder innerhalb eines Teiles des Abgastrakts, der unlösbar mit dem Kompensator verbunden ist, angeordnet ist.

4. Vorrichtung nach Anspruch 3, **dadurch gekennzeichnet, dass** der Oxidationskatalysator (16, 16.1) im Abgasteilstrom (11, 11.1) und der stromab zu diesem angeordnete, zusätzliche SCR-Katalysator (17, 17.1) zu einem Bauteil zusammengefasst sind und dass dieses Bauteil innerhalb des Kompensators (20.X, 20.Y, 20.Z) und/oder innerhalb eines Teiles des Abgastrakts, der unlösbar mit dem Kompensator verbunden ist, angeordnet ist.

5. Vorrichtung nach Anspruch 1, **dadurch gekennzeichnet, dass** der Oxidationskatalysator zur Oxidation von Ammoniak im Abgasteilstrom (11, 11.1) gleichzeitig SCR-Aktivität für Stickoxide aufweist und dass dieser Oxidationskatalysator mit SCR-Aktivität innerhalb des wenigstens einen Kompensators (20.X, 20.Y, 20.Z) und/oder innerhalb eines Teiles des Abgastrakts, der unlösbar mit dem Kompensator verbunden ist, angeordnet ist.

6. Vorrichtung nach einem der vorangegangenen Ansprüche, wobei
- stromauf zur Zuführstelle für das Reduktionsmittel im Abgassteilstrom ein Rückschlagventil oder eine streuer- oder regelbare Absperrvorrichtung (12) angeordnet ist und
- dass das Rückschlagventil oder die Absperrvorrichtung (12) innerhalb des wenigstens einen Kompensators (20.4, 20.6, 20.X, 20.Y, 20.Z) und/oder innerhalb eines Teiles des Abgastrakts, der unlösbar mit dem Kompensator verbunden ist, angeordnet ist.

## Claims

1. An apparatus for converting exhaust gas constituent parts of an internal combustion engine by means of at least one catalytic converter and/or particulate filter and/or particle separator as aftertreatment components and for compensating for relative movements between the internal combustion engine and the exhaust gas section and/or for relative movements of different types of the exhaust gas section by means of at least one compensating element which permits the relative movements,
- the at least one catalytic converter for converting exhaust gas constituent parts and/or the at least one particulate filter and/or the at least one particle separator being arranged within the compensating element (20.1 - 20.8, 20.X, 20.Y, 20.Z) and/or within a part of the exhaust gas section which is connected non-releasably to the compensating element,
- the external diameter of the catalytic converter and/or of the particulate filter and/or of the particle separator being smaller than or equal to the internal diameter of the compensating element (20.1 - 20.8, 20.X, 20.Y, 20.Z) and/or the part of the exhaust gas section which is connected non-releasably to the compensating element,
**characterized in that**
- an exhaust gas part stream (11, 11.1) branches off from the exhaust gas stream (10, 10.1) upstream of an SCR catalytic converter (6, 6.1),
- a reservoir (8) for a reducing agent and a metering device (9) for a reducing agent are provided, and the metering device (9) adding the reducing agent into the exhaust gas part stream (11, 11.1),
- the reducing agent is a substance which breaks down into ammonia downstream of the feeding point as a result of the hot exhaust gas, or the reducing agent is ammonia,
- the exhaust gas part stream (11, 11.1) is returned into the exhaust gas stream (10, 10.1) downstream of the feeding point and upstream of the SCR catalytic converter (6, 6.1),
- the SCR catalytic converter (6, 6.1) which is arranged downstream of the returning point reduces the nitrogen oxides contained in the exhaust gas stream into nitrogen and water vapour with the aid of the broken-down ammonia by way of selective catalytic reduction,
- an oxidation catalytic converter (16, 16.1) is arranged in the exhaust gas part stream (11, 11.1) upstream of the feeding point for the reducing agent, which oxidation catalytic converter (16, 16.1) oxidizes backflowing ammonia and/or backflowing reducing agent decomposition products in the engine operating conditions, in which there is a reversal of the exhaust gas stream into the direction of the internal combustion engine, and
- the oxidation catalytic converter (16, 16.1) is arranged within the at least one compensating element (20.1, 20.3, 20.6, 20.X, 20.Y, 20.Z) and/or within a part of the exhaust gas section which is connected non-releasably to the compensating element,
- the external diameter of the at least one aftertreatment component which protrudes into the compensating element being smaller than or equal to the inner diameter of the compensating element.

2. The apparatus according to Claim 1, **characterized in that** the oxidation catalytic converter (16, 16.1) is configured in such a way that, in addition to the backflowing ammonia and/or the backflowing reducing agent decomposition products, it oxidizes carbon monoxide carried along in the exhaust gas and/or nitrogen monoxide and/or hydrocarbons which are carried along in the engine operating conditions, in which the exhaust gas flows away from the internal combustion engine.

3. The apparatus according to Claim 1 or 2, **characterized in that** an additional SCR catalytic converter (17, 17.1) for the selective reduction of nitrogen oxides with the aid of backflowing ammonia is arranged in the exhaust gas part stream (11, 11.1) downstream of the oxidation catalytic converter (16, 16.1) and upstream of the feeding point for the reducing agent, and **in that** the additional SCR catalytic converter (17, 17.1) is arranged within the at least one compensating element (20.4, 20.6, 20.X, 20.Y, 20.Z) and/or within a part of the exhaust gas section which is connected non-releasably to the compensating element.

4. The apparatus according to Claim 3, **characterized in that** the oxidation catalytic converter (16, 16.1) in the exhaust gas part stream (11, 11.1) and the additional SCR catalytic converter (17, 17.1) which is arranged downstream of the former are combined to form one component, and **in that** the said component is arranged within the compensating element (20.X, 20.Y, 20.Z) and/or within a part of the exhaust gas section which is connected non-releasably to the compensating element.

5. The apparatus according to Claim 1, **characterized in that** the oxidation catalytic converter for the oxidation of ammonia in the exhaust gas part stream (11, 11.1) at the same time exhibits SCR activity for nitrogen oxides, and **in that** the said oxidation catalytic converter with SCR activity is arranged within the at least one compensating element (20.X, 20.Y, 20.Z) and/or within a part of the exhaust gas section which is connected non-releasably to the compensating element.

6. The apparatus according to one of the preceding claims,
- a check valve or a shut-off apparatus (12) with open loop or closed loop control being arranged in the exhaust gas part stream upstream of the feeding point for the reducing agent, and
- the check valve or the shut-off apparatus (12) being arranged within the at least one compensating element (20.4, 20.6, 20.X, 20.Y, 20.Z) and/or within a part of the exhaust gas section which is connected non-releasably to the compensating element.

## Revendications

1. Dispositif pour la conversion des composants des gaz d'échappement d'un moteur à combustion interne au moyen d'au moins un catalyseur et/ou filtre à particules et/ou séparateur de particules en tant que composants de post-traitement de gaz d'échappement et pour la compensation des mouvements relatifs entre le moteur à combustion interne et la ligne d'échappement et/ou des mouvements relatifs des parties différentes de la ligne d'échappement au moyen d'au moins un compensateur admettant les mouvements relatifs, pour lequel
- l'au moins un catalyseur pour la conversion des composants des gaz d'échappement et/ou l'au moins un filtre à particules et/ou l'au moins un séparateur de particules est disposé à l'intérieur du compensateur (20.1 - 20.8, 20.X, 20.Y, 20.Z) et/ou à l'intérieur d'une partie de la ligne d'échappement, qui est raccordée au compensateur de manière indissociable,
- le diamètre extérieur du catalyseur et/ou du filtre à particules et/ou du séparateur de particules est plus petit ou égal au diamètre intérieur du compensateur (20.1 - 20.8, 20.X, 20.Y, 20.Z) et/ou à la partie de la ligne d'échappement, qui est raccordée au compensateur de manière indissociable, **caractérisé en ce que**
- en amont d'un catalyseur à RCS (réduction catalytique sélective) (6, 6.1), un flux partiel des gaz d'échappement (11, 11.1) dérive du flux de gaz d'échappement (10, 10.1),
- un conteneur d'alimentation (8) pour un moyen de réduction et un système de dosage (9) pour un moyen de réduction sont prévus et pour lequel le système de dosage (9) ajoute le moyen de réduction dans le flux partiel de gaz d'échappement (11, 11.1),
- le moyen de réduction est une substance séparant l'ammoniac à travers les gaz d'échappement chauds en aval du point d'adjonction ou le moyen de réduction est de l'ammoniac,
- le flux partiel de gaz d'échappement (11, 11.1) est réacheminé en amont au point d'adjonction et en aval au catalyseur RCS (6, 6.1) dans le flux de gaz d'échappement (10, 10.1),
- le catalyseur RCS (6, 6.1) disposé en aval du point de recyclage, réduit en azote ou vapeur d'eau les oxydes d'azote contenus dans le flux des gaz d'échappement à l'aide de l'ammoniac séparé par voie de réduction catalytique sélective,
- un catalyseur d'oxydation (16, 16.1) est disposé dans le flux partiel de gaz d'échappement (11, 11.1) en amont du point d'adjonction pour le moyen de réduction, qui dans les conditions de fonctionnement du moteur pour lesquelles il y a une inversion du flux de gaz d'échappement en direction du moteur à combustion interne, oxyde l'ammoniac refluant et/ou les produits de décomposition du moyen de réduction refluant,
- le catalyseur d'oxydation (16, 16.1) est disposé à l'intérieur de l'au moins un compensateur (20.1, 20.3, 20.6, 20.X, 20.Y, 20.Z) et/ou à l'intérieur d'une partie de la ligne d'échappement, qui est raccordée au compensateur de manière indissociable, pour lequel
- le diamètre extérieur de l'au moins un composant de post-traitement pénétrant dans le compensateur, est plus petit ou égal au diamètre intérieur du compensateur.

2. Dispositif selon la revendication 1, **caractérisé en ce que** le catalyseur d'oxydation (16, 16.1) est constitué de telle manière qu'il oxyde le monoxyde de carbone et/ou monoxyde d'azote et/ou les carbures d'hydrogène entraînés dans les gaz d'échappement en plus de l'ammoniac refluant et/ou des produits de décomposition du moyen de réduction refluant dans des conditions de fonctionnement du moteur dans lesquelles les gaz d'échappement s'échappent du moteur à combustion interne.

3. Dispositif selon les revendications 1 ou 2, **caractérisé en ce que** dans le flux partiel de gaz d'échappement (11, 11.1), un catalyseur RCS supplémentaire (17, 17.1) pour la réduction sélective des oxydes d'azote à l'aide de l'ammoniac refluant est disposé en aval du catalyseur d'oxydation (16, 16.1) et en amont du point d'adjonction pour le moyen de réduction et **en ce que** le catalyseur RCS supplémentaire (17, 17.1) est disposé à l'intérieur de l'au moins un compensateur (20.4, 20.6, 20.X, 20.Y, 20.Z) et/ou à l'intérieur d'une partie de la ligne d'échappement, qui est raccordée au compensateur de manière indissociable.

4. Dispositif selon la revendication 3, **caractérisé en ce que** le catalyseur d'oxydation (16, 16.1) dans le flux partiel de gaz d'échappement (11, 11.1) et le catalyseur RCS supplémentaire (17, 17.1) disposé en aval de celui-ci sont réunis en un composant et **en ce que** ce composant est disposé à l'intérieur du compensateur (20.X, 20.Y, 20.Z) et/ou à l'intérieur d'une partie de la ligne d'échappement, qui est raccordée au compensateur de manière indissociable.

5. Dispositif selon la revendication 1, **caractérisé en ce que** le catalyseur d'oxydation pour l'oxydation de l'ammoniac dans le flux partiel de gaz d'échappement (11, 11.1) présente simultanément une activité de RCS pour les oxydes d'azote et **en ce que** ce catalyseur d'oxydation avec une activité de RCS est disposé à l'intérieur de l'au moins un compensateur (20.X, 20.Y, 20.Z) et/ou à l'intérieur d'une partie de la ligne d'échappement, qui est raccordée au compensateur de manière indissociable.

6. Dispositif selon l'une quelconque des revendications précédentes pour lequel
- un clapet antiretour ou un dispositif de fermeture (12) pilotable ou réglable est disposé en amont du point d'adjonction pour le moyen de réduction dans le flux partiel de gaz d'échappement, et
- en ce que le clapet antiretour ou le dispositif de fermeture (12) est disposé à l'intérieur de l'au moins un compensateur (20.4, 20.6, 20.X, 20.Y, 20.Z) et/ou à l'intérieur d'une partie de la ligne d'échappement, qui est raccordée au compensateur de manière indissociable.
